# NEW EUROPEAN PATENT SPECIFICATION

(11) **EP 2 593 321 B2**
(45) Date of publication and mention of the opposition decision: **22.05.2019**
(45) Mention of the grant of the patent: 14.05.2014
(21) Application number: 11731377.5
(22) Date of filing: 14.07.2011
(51) Int. Cl.: B60K 15/03, B29C 41/00, B29C 41/04

(54) **TANK TO CONTAIN FUEL AND RELATIVE PRODUCTION METHOD**
TANK FÜR KRAFTSTOFF UND ZUGEHÖRIGES HERSTELLUNGSVERFAHREN
RÉSERVOIR POUR CONTENIR DU CARBURANT ET PROCÉDÉ DE PRODUCTION RELATIF

(30) Priority: 14.07.2010 IT UD20100140
(43) Date of publication of application: 22.05.2013
(73) Proprietor: Polymtec Engineering AG, Mauren (FL), Succursale Di Lugano, 6901 Lugano (CH)
(72) Inventor: GÖKCEN, Mehmet Celal, 76137 Karlsruhe (DE)
(74) Representative: Petraz, Gilberto Luigi
(86) International application number: PCT/EP2011/062048
(87) International publication number: WO 2012/007544

(56) References cited:
- DE-A1-102005 060 246
- DE-A1-102005 060 246
- DE-A1-102007 029 569
- DE-U1- 20 016 609
- DE-U1- 20 117 106
- US-A- 5 958 509
- US-A- 5 958 509
- US-A1- 2004 009 315
- US-A1- 2008 224 349
- US-A1- 2009 266 823
- US-A1- 2010 075 053
- US-A1- 2010 075 053
- US-B1- 6 596 356
- FALBE, J. Prof. Dr.: "RÖMPP CHEMIE LEXIKON" In: 1995, Georg Thieme Verlag, Stuttgart page 2424,
- FALBE, J. PROF. DR: "RÖMPP CHEMIE LEXIKON", 1995, GEORG THIEME VERLAG, STUTTGART page 1196,
- "3.3.12" In: NUGENT, P.: "Rotational Molding: a practical Guide", 2001 page 91,

## Description

### FIELD OF THE INVENTION

The present invention concerns a tank made of plastic material used to at least temporarily contain fuel.

The tank according to the invention can have any shape or size and is particularly applied to automobiles or trucks, work and agricultural vehicles as well as motorcycles or equipment for forest use and gardening, for example chain saws or lawn mowers, or containers for solvents for industry such as IBC boxes, or nautical means.

### BACKGROUND OF THE INVENTION

Tanks made of metal material to contain fuel for automobiles or trucks, work and agricultural vehicles as well as motorcycles or equipment for forest use and gardening, for example chain saws or lawn mowers, or containers for solvents for industry such as IBC boxes or nautical means, are known.

Metal tanks have the disadvantage, however, that they are heavy and can be little suited to make more complex shapes, to adapt to fit free spaces in vehicles, except with high working costs.

Tanks made of plastic are also known, for example of polymer material, which allow to obtain complex forms and shapes at reasonable working costs.

Tanks made of plastic material have problems of permeation of the fuel, however, with a consequent diffusion thereof into the environment and an increase in atmospheric pollution.

To overcome this disadvantage and to respect the current regulations, which are always more restrictive, on the permeation of fuel from plastic tanks, it is known to co-extrude a number of overlapping layers of polymer material (seven or more), for example by means of co-extrusion and then fluorination processes.

This known technique of applying overlapping layers, as well as increasing the number of polymers to make the tanks and therefore the production costs, does not completely solve the problem of permeation of the fuel.

A tank is also known from document DE-A1-102005060246 according to the preamble of claim 1 made of plastic material; a layer of metal filling is deposited onto its internal and external surfaces, or at least onto one of the two, by means of physical or chemical deposition techniques, in a vapor phase, also known as "Physical Vapor Deposition" or "Chemical Vapor Deposition". The layer of metal filling carries out the function of reducing the permeation of fuel through its thickness. The thicknesses of the layer of metal filling which are deposited are considerably reduced to example from about 0.1 µm to about 8 µm.

One disadvantage of these tanks is that the layer of metal filling, during use, is disposed either toward the inside in direct contact with the fuel contained in the tank, or toward the outside in direct contact with the environment. This causes, also due to the extremely limited thicknesses, a rapid deterioration over time of the layer of metal filling due to oxidation for example or to chemical reactions between the metal and the fuel.

One purpose of the present invention is to produce a tank to contain fuel in which the degree of permeation of the latter through the walls of the tank is reduced to zero or almost zero.

Another purpose of the present invention is to produce a tank to contain fuel which can easily have any shape and which at the same time is reliable, strong and inexpensive.

A further purpose of the present invention is to produce a tank to contain fuel whose characteristics of resistance to permeation are long-lasting and do not deteriorate over time.

A further purpose is to perfect a method to produce a tank to contain fuel which is simple end economically advantageous.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a tank to contain fuel comprises a containing body made of plastic material, and at least on one external or internal surface of the containing body there is at least a layer of metal filling material, constrained to the plastic material and able to annul the permeation of the fuel through the containing body. Moreover, directly or indirectly above the at least one first layer of metal filling material a protective layer is uniformly distributed, suitable to at least protect the first layer of metal filling material from oxidation.

According to another feature of the present invention, the first layer of metal filling is constrained to the plastic material by means of molecular bindings, advantageously obtained by techniques of cathodic polymerization deposition, also known as sputtering deposition techniques. In particular the molecular bindings create a strong adhesion of the first layer of metal filling to the surface of the containing body made of plastic material, rendering the first layer of metal filling firmly anchored to the latter. The sputtering deposition techniques belong to deposition technologies of the PVD type (Physical Vapor Deposition), and in particular, they are methods for depositing particles vaporized from a surface by a physical process of pulverization. Physical pulverization is a non-thermal process of vaporization where the surface atoms are physically expelled by transferring of a moment by means of an energetic bombardment of particles which are usually gaseous ions of a process gas accelerated by a plasma.

A further deposition process to deposit coatings uses the PECVD process (Plasma Enhanced Chemical Vapor Deposition) in which atoms or molecules are deposited by means of reduction to decomposition of species of precursors to chemical vapors which contain the material which is to be deposited. This technique, even if it could be used to achieve the purposes of the invention, is not very efficient as it requires longer deposition times.

According to a variant embodiment, the first layer of metal filling is constrained to the plastic material by means of metallization techniques which do not use electric sources, for example metallization techniques which provide direct spraying with compressed air of a metal solution and a reducing solution of the Jet Metal™ type.

In some forms of embodiment it can be provided that as well as the first layer of metal filling, a second layer of metal filling is provided in direct contact with the first, obtained by cathodic polymerization deposition techniques or by metallization techniques which provide direct spraying with compressed air of a metal solution and a reducing solution of the Jet Metal™ type. The protective layer is disposed directly or indirectly above the second layer of metal filling.

In other forms of embodiment, above the protective layer another layer of metal filling is disposed, obtained with cathodic polymerization deposition techniques or metallization techniques which provide direct spraying with compressed air of a metal solution and a reducing solution, such as Jet Metal™ type, and possibly another protective layer of the other layer of metal filling. According to another characteristic feature, the plastic material comprises high-density polyethylene, also known as HDPE, which has good characteristics of mechanical resistance.

According to another characteristic feature, additives are optionally added to the plastic material, chosen from a group containing nanoclay, nanospheres and carbon nanotubes, or suchlike, which increase both the mechanical resistance of the tank and also the barrier effect.

The layer of metal filling is made of a material chosen from a group comprising stainless steel, aluminum, cadmium, chrome and carbides or nitrides of transition metals, such as titanium and zirconium.

According to another characteristic feature, the layer of metal filling is made on the external surface of the containing body, whereas on the internal surface a layer of fluorinated polymer is uniformly distributed, which further increases the barrier effect, reducing the permeation of the fuel.

The present invention also concerns a method to make a tank for containing fuel, which comprises a first step during which a containing body made of plastic material is made, a second step during which on at least an external or internal surface of the containing body at least a metal filling layer is deposited with a barrier effect, and a third step during which directly or indirectly above the at least one layer of metal filling a protective layer is deposited to protect the layer of metal filling from oxidation.

In an advantageous form of embodiment the layer of metal filling is deposited with cathodic pulverization deposition techniques.

According to a variant, the layer of metal filling is deposited with metalization techniques which provide direct spraying with compressed air of a metal solution and a reducing solution, such as Jet Metal™.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation in section of a tank to contain fuel according to the present invention;
- fig. 2 is an enlarged detail of fig. 1;
- fig. 3 is an enlarged detail of a tank according to the present invention, in accordance with a first variant embodiment;
- fig. 4 is a schematic representation of a first step of the production method of the tank according to the present invention;
- fig. 5 is a schematic representation of a second step of the production method of the tank according to the present invention;
- fig. 6 is an enlarged detail of a tank according to the present invention, in accordance with a second variant embodiment;
- fig. 7 is an enlarged detail of a tank according to the present invention, in accordance with a third variant embodiment.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME PREFERENTIAL FORMS OF EMBODIMENT

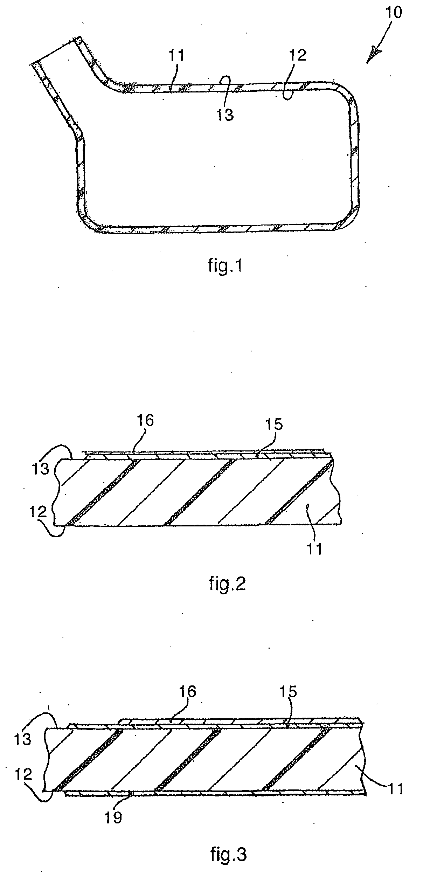

With reference to fig. 1, a tank for containing fuel 10 according to the present invention comprises a containing body 11 having an internal surface 12 and an external surface 13. A layer of metal filling 15 (fig. 2) is present on the external surface 13 and above it a protective layer 16 is deposited, which at least protects the layer of metal filling 15 from oxidation. In this case, the protective layer 16 has an epoxy varnish base, possibly with nanospheres.

The containing body 11 is made of plastic material, advantageously HDPE, and has a thickness which can vary from a few millimeters to about one centimeter.

The plastic material can have additives of a known type added to it, such as nanoclay, nanospheres and carbon nanotubes, or plastics with a high barrier effect, both to improve the mechanical characteristics and also to reduce the permeation of the fuel through it.

The layer of metal filling 15 is deposited on the external surface 13 using cathodic pulverization deposition techniques, also known as sputtering deposition techniques. In this way, the layer of metal filling 15 grips onto the external surface 13 forming bonds with the plastic material of the containing body 11 on a molecular level.

The layer of metal filling 15 can be made of stainless steel, aluminum, cadmium, chrome, or carbides or nitrides of transition metals such as titanium or zirconium, and the thickness can be comprised between a few nanometers and some hundreds of micrometers, preferably from 10 nm to 10 µm.

The layer of metal filling 15 not only achieves an almost total barrier effect against the permeation of the fuel, but also has high characteristics of hardness, resistance to abrasion and chemical resistance.

In other forms of embodiment, it is possible to provide that the layer of metal filling 15 is not made with cathodic pulverization deposition techniques, but is deposited on the external surface 13 of the containing body 11 with metalization techniques that do not use electric sources, for example by means of a metalization method that provides direct spaying with compressed air of a metal solution and a reducing solution, such as Jet Metal™.

According to one form of embodiment, using the Jet Metal™ or similar, a first step is provided of depositing a primer, for example a layer of polyurethane varnish, and a subsequent step of applying, with spray techniques, a solution of metal powders in suspension in a liquid, for example demineralized water.

If the layer of metal filling 15 is obtained using the Jet Metal™ technique or similar, it will therefore consist of a homogeneous film of metal powders that are integrated, at least partly, into the primer.

Above the layer of filling 15, whether it is made using cathodic pulverization deposition techniques or Jet Metal™ techniques or similar, the protective layer 16 is disposed as described above.

The function of the protective layer 16 is to protect the layer of metal filling 15, whether it is deposited with sputtering deposition techniques or with Jet Metal™ techniques, or similar, from external agents, from reactions with chemical substances and from oxidization. Furthermore, the function of the protective layer 16 is to limit the effects of electrostaticity and hence to make the tank 10 safer.

In another form of embodiment (fig. 3), a layer of fluorinated polymer 19 is uniformly distributed on the internal surface 12 of the containing body 11 and the protective layer 16 is uniformly distributed above the layer of metal filling 15.

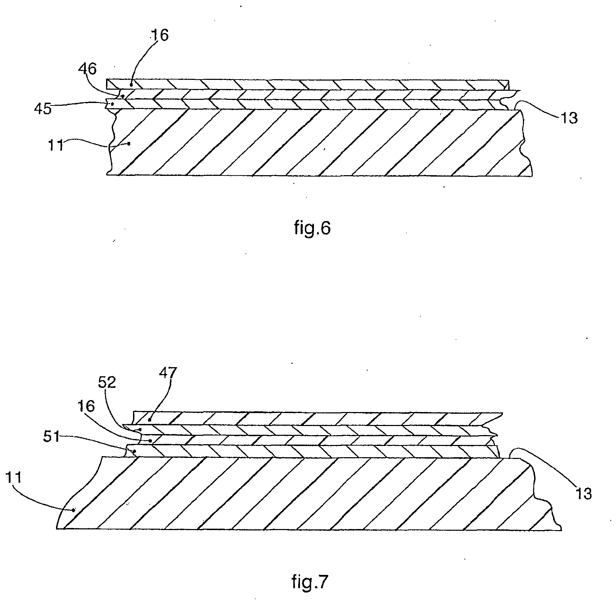

The layer of fluorinated polymer 19 creates a further barrier effect against the permeation of the fuel. In other forms of embodiment (fig. 6), it is possible to provide that on the external surface 13 a first layer of metal filling is disposed, indicated in this case by the reference number 45, deposited using Jet Metal™ techniques or similar, and, above the latter, a second layer of metal filling 46 is disposed, deposited with sputtering deposition techniques. Above the second layer of metal filling 46 the protective layer 16 is disposed. With this form of embodiment it is possible to further reduce the permeability of the fuel in the tank 10.

It is quite evident that, in another variant form of embodiment, it is possible to invert the configuration described above and the second layer of filling 46 can be made and disposed immediately in contact on the external surface 13 of the containing body 11 and subsequently the first layer of filling 45 and the protective layer 16 are disposed.

In another form of embodiment (fig. 7), it may be provided that, in succession, on the external surface 13 of the containing body 11 a first layer of metal filling is disposed, indicated in this case by the reference number 51, the protective layer 16, a second layer of metal filling, indicated in this case by the reference number 52, and another protective layer 47 with an epoxy varnish base. The first layer of metal filling 51 and the second layer of metal filling 52 are made respectively by means of sputtering deposition techniques and by means of Jet Metal™ techniques or similar, or vice versa.

In other forms of embodiment, on the external surface 13, before the layer of metal filling 15 is distributed, other coatings may be distributed, obtained for example by means of polymerization with aluminum and/or silicon oxide, or by means of fluorination of polymers.

In the same way, other coatings can be applied on the internal surface 12, such as for example a layer of metal filling, as described above, a coating of amorphous carbon, or a coating obtained by means of polymerization with aluminum.

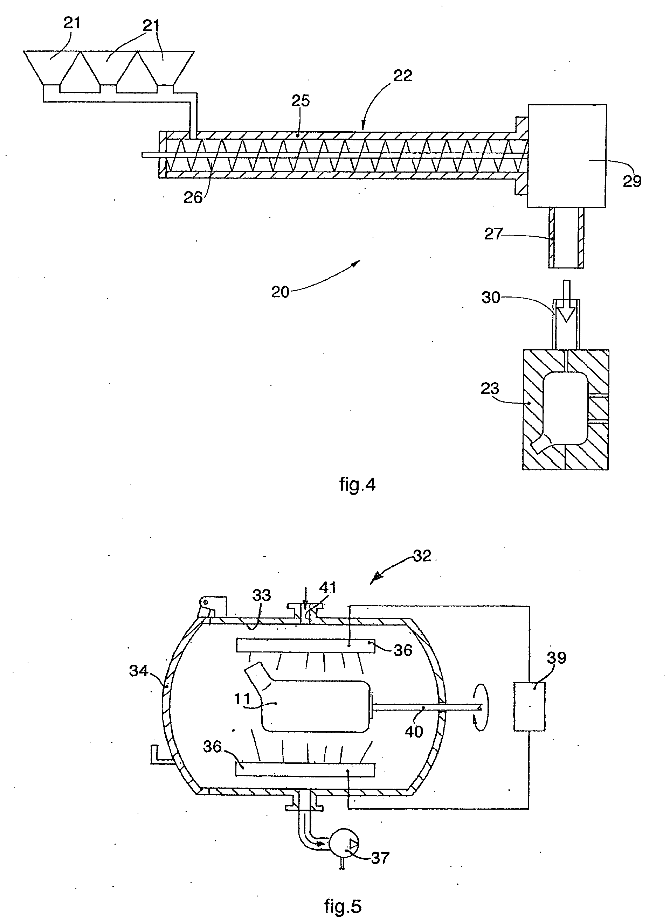

A method to achieve the tank 10 as described heretofore comprises a first step of making the containing body 11 which uses essentially a forming plant 20 (fig. 4) and a second step of depositing the layer of metal filling 15 which uses a sputtering plant 32 (fig. 5).

The forming plant 20 (fig. 4) to make the containing body 11 essentially comprises one or more dispensing devices 21, one or more extruders 22, an extrusion head 29 and a forming mold 23.

The dispensing device 21 is directly connected to the extruder 22 and allows to obtain a homogeneous mixture of the plastic material with which the tank 10 is made. The plastic material may be derived from mixing different components, such as virgin resin, ground resin made from the recycling of off-cuts (process rejects) and additives as described above.

In one form of embodiment, it is possible to provide the extrusion of plastic material in the form of granules which incorporate inside them or are mixed with powders of metal material. The powders have limited sizes compared with the granules and can even reach sizes of a few nanometers.

The purpose of the metal powders is to further increase the barrier effect against the permeation of the fuel.

The extruder 22 comprises a cylinder 25, inside which the plastic material, arriving from the dispensing device 21, is softened, and a plasticization screw 26 which allows, through the extrusion head 29, the extrusion of a pre-form 27 (also called parison), of the containing body 11.

The extrusion head 29 is associated with a deformable ring, which is commanded in a known manner to vary the extrusion section of the plastic material through the extrusion head 29, depending on the final shape and sizes of the tank 10.

The pre-form 27 thus obtained is disposed inside the forming mold 23 which is closed with a dedicated press.

A blowing device 30, also of a known type, is directly associated with the forming mold 23 and provides to blow air inside the pre-form 27 to make it expand and take the shape of the forming mold 23, and thus obtain the containing body 11 of the tank 10.

Other auxiliary devices are also associated with the forming mold 23, such as for example, blowing needles for cooling the pre-form 27, flash-shearing knives for welding the join zones, cooling circuits for the molds and equipment for reaming holes, turning loading mouths and welding possible breather holes, or parts used for assembling other accessory apparatuses of the tank 10.

The sputtering plant 32 (fig. 5) comprises a coating chamber 33, selectively openable by means of a door 34 and inside which two plates are disposed, called targets 36, a pumping device 37 and a command device 39.

The targets 36 are made of the same material that makes up the layer of metal filling 15.

The pumping device 37 provides to take in air from the coating chamber 33 and take it to a condition of high vacuum.

The command device 39 provides to control the whole sputtering process and, in particular, provides to apply a high voltage to the targets 36.

The coating chamber 33 also comprises a piece-carrier device 40 on which the containing body to be coated is assembled, and a channel 41 to introduce a process gas.

The piece-carrier device 40 is made to rotate by drive members of a known type and not shown in the drawings, and makes the containing body 11 rotate upon itself.

In another form of embodiment, not shown in the drawings, the piece-carrier device 40 comprises a planetary system on which a plurality of containing bodies 11 can be assembled, which are made to rotate both upon themselves and also around the piece-carrier device 40.

The most commonly used process gas, given its high atomic weight, is argon, although other inert or reactive gases can be used, such as nitrogen, argon, acetylene, oxygen or simply air.

The step of depositing the layer of metal filling 15 entails attaching each containing body 11 on the piece-carrier device 40, inserting it inside the coating chamber 33, and subsequently depositing the layer of metal filling 15.

The coating chamber 33 is closed and taken to a pressure comprised between 10⁻³ and 10⁻⁷ mbar, that is, a condition of high vacuum.

In this condition, the targets 36 are subjected to high voltage and therefore function as a cathode, while inside the coating chamber 33 the process gas is introduced.

Positive ions of the process gas, by means of a plasma that is generated in these conditions, are subjected to a process of acceleration toward the targets 36 and are impacted on its surface, expelling the atoms of the target 36.

The latter are taken to a gaseous state inside the coating chamber 33 and condense on the containing bodies 11 of the tanks 10.

Furthermore, given the condition of high vacuum to which the coating chamber 33 is subjected, the atoms expelled from the targets 36 are not subjected to impacts, either among themselves or with the ions of the process gas, and in this way they can deposit uniformly on the external surface 13 of the containing body 11, to form a layer of metal filling 15 of a uniform thickness.

The sputtering cycle has a duration which is a function of the thickness of the layer of metal filling 15 to be obtained.

If the layer of metal filling 15 is deposited using the Jet Metal™ technique or similar, instead of using a sputtering plant 32 as described above a first substep is provided of applying a primer on the external surface 13 of the containing body 11, and a subsequent second substep of applying, by spraying, a solution of metal powders nebulized in a liquid medium, for example demineralized water.

In particular, in specific forms of embodiment, during the first substep a polyurethane varnish is deposited and, before it dries, the second substep is performed, allowing the metal powders to penetrate at least partly into the polyurethane varnish and define a substantially continuous film of metal filling.

There then follows a subsequent step of applying the protective layer 16, using spreading or spray techniques, which is deposited above the layer of metal filling 15 (fig. 3): this may be acrylic, if an aesthetic effect is required, or epoxy if it is for a non-aesthetic, industrial use.

It is clear that modifications and/or additions of parts may be made to the tank for containing fuel and the relative method of production as described heretofore, without departing from the field and scope of the present invention.

For example it is possible to provide a further step of pre-treating with plasma of a known type, which is performed in the sputtering plant 32, inside the coating chamber 33, before the step of depositing the layer of metal filling 15 which not only cleans the external surface 13 of possible impurities, but also increases the adhesion of the layer of metal filling 15.

It is also clear that, although the present invention has been described with reference to some specific examples, a person of skill in the art shall certainly be able to achieve many other equivalent forms of tank for containing fuel and the relative method of production, having the characteristics as set forth in the claims and hence all coming within the field of protection defined thereby.

## Claims

1. Tank to contain fuel, comprising a containing body (11) made of plastic material, at least on one surface, external (13) or internal (12), of said containing body (11) there being at least a first layer of metal filling material (15; 45; 51), constrained to said plastic material and able to annul the permeation of said fuel through said containing body (11), **characterized in that** directly or indirectly above said at least one first layer of metal filling material (15; 45; 51) a protective layer (16) is uniformly distributed, suitable to at least protect said first layer of metal filling material (15, 45; 51) from oxidation, wherein said protective layer (16) is based on epoxy varnish.

2. Tank as in claim 1, **characterized in that** said first layer of metal filling material (15; 51) is constrained to said plastic material by means of molecular bindings obtained by cathodic polymerization deposition.

3. Tank as in claim 1, **characterized in that** said first layer of metal filling material (15; 45) is obtained by means of metallization techniques which provide direct spraying with compressed air of a metal solution and a reducing solution.

4. Tank as in any claim hereinbefore, **characterized in that** in addition to said first layer of metal filling material (45), a second layer of metal filling material (46) is provided, directly in contact with the first (45) and obtained by means of cathodic polymerization deposition or by means of metallization techniques which provide direct spraying with compressed air of a metal solution and a reducing solution, said protective layer (16) being disposed directly or indirectly above said second layer of metal filling (46).

5. Tank as in any claim hereinbefore, **characterized in that** a further layer of metal filling (52) is disposed above said protective layer (16) and is obtained with cathodic polymerization deposition techniques or with metallization techniques which provide direct spraying with compressed air of a metal solution and a reducing solution, and possibly a further protective layer (47) of said further layer of metal filling (52).

6. Tank as in any claim hereinbefore, **characterized in that** said plastic material comprises high density polyethylene.

7. Tank as in any claim hereinbefore, **characterized in that** said plastic material comprises additives chosen from a group comprising nanoclay, nanospheres and carbon nanotubes.

8. Tank to contain fuel as in any claim hereinbefore, **characterized in that** said layer of metal filling material (15; 45, 46; 51, 52) is made of a material chosen from a group comprising stainless steel, aluminum, cadmium, chromium or carbides or nitrides of transition metals.

9. Tank as in any claim hereinbefore, **characterized in that** said layer of metal filling material (15) is present on said external surface (13) **and in that** on said internal surface (12) of said containing body (11) a layer of fluorinated polymer (19) is uniformly distributed.

10. Method to make a tank to contain fuel, comprising a first step during which a containing body (11) made of plastic material is made, a second step during which, at least on an external or internal surface of said containing body (11), a layer of metal filling material (15; 45; 51) is deposited to create a barrier effect, **characterized in that** it comprises a third step during which a protective layer (16) is deposited above said layer of metal filling (15; 45; 51) in order to protect said metal filling layer (15; 45; 51) from oxidization, wherein said protective layer (16) is based on epoxy varnish.

11. Method as in claim 10, **characterized in that** said layer of metal filling (15; 51; 46) is deposited with cathodic polymerization deposition techniques.

12. Method as in claim 10, **characterized in that** said layer of metal filling (15; 45) is deposited with metallization techniques which provide direct spraying with compressed air of a metal solution and a reducing solution.

## Patentansprüche

1. Tank zur Aufnahme von Kraftstoff, einen Aufnahmekörper (11) aus Kunststoffmaterial umfassend, wobei sich an mindestens einer Oberfläche des Aufnahmekörpers (11), äußerlich (13) oder innerlich (12), mindestens eine erste Schicht aus Metallfüllmaterial (15; 45; 51) befindet, das an das Kunststoffmaterial gebunden und in der Lage ist, das Durchdringen des Kraftstoffes durch den Aufnahmekörper (11) zu unterbinden, **dadurch gekennzeichnet, dass** direkt oder indirekt über der mindestens einen Schicht aus Metallfüllmaterial (15; 45; 51) eine Schutzschicht (16) gleichmäßig verteilt ist, die dazu geeignet ist, mindestens die erste Schicht Metallfüllmaterial (15; 45; 51) vor Oxidation zu schützen, worin die Schutzschicht (16) auf Epoxidlack basiert ist.

2. Tank nach Anspruch 1, **dadurch gekennzeichnet, dass** die erste Schicht aus Metallfüllmaterial (15; 51) mittels molekularer Bindungen an das Kunststoffmaterial gebunden ist, die durch kathodische Polymerisationsabscheidung erzielt wurden.

3. Tank nach Anspruch 1, **dadurch gekennzeichnet, dass** die erste Schicht aus Metallfüllmaterial (15; 45) mittels Metallisierungstechniken erzielt wird, die ein Direktsprühen einer Metalllösung und einer Reduktionslösung mit Pressluft bereitstellen.

4. Tank nach einem der vorhergehenden Ansprüche, **dadurch gekennzeichnet, dass** zusätzlich zur ersten Schicht aus Metallfüllmaterial (45) eine zweite Schicht aus Metallfüllmaterial (46) bereitgestellt ist, die in direktem Kontakt mit der ersten (45) steht und mittels kathodischer Polymerisationsabscheidung erzielt wird oder mittels Metallisierungstechniken, die ein Direktsprühen einer Metalllösung und einer Reduktionslösung mit Pressluft bereitstellen, wobei die Schutzschicht (16) direkt oder indirekt über der zweiten Schicht aus Metallfüllmaterial (46) angeordnet ist.

5. Tank nach einem der vorhergehenden Ansprüche, **dadurch gekennzeichnet, dass** über der Schutzschicht (16) eine weitere Schicht aus Metallfüller (52) vorgesehen ist, die mittels kathodischer Polymerisationsabscheidungstechniken erzielt wird oder mittels Metallisierungstechniken, die ein Direktsprühen einer Metalllösung und einer Reduktionslösung mit Pressluft bereitstellen, und möglicherweise eine weitere Schutzschicht (47) der weiteren Schicht aus Metallfüller (52).

6. Tank nach einem der vorhergehenden Ansprüche, **dadurch gekennzeichnet, dass** das Kunststoffmaterial hochdichtes Polyethylen umfasst.

7. Tank nach einem der vorhergehenden Ansprüche, **dadurch gekennzeichnet, dass** das Kunststoffmaterial Additive umfasst, die aus einer Gruppe ausgewählt sind, die Nanoclay, Nanokügelchen und Kohlenstoff-Nanoröhrchen umfasst.

8. Tank zur Aufnahme von Kraftstoff nach einem der vorhergehenden Ansprüche, **dadurch gekennzeichnet, dass** die Schicht aus Metallfüllmaterial (15; 45, 46; 51, 52) aus einem Material besteht, das aus einer Gruppe ausgewählt ist, die Edelstahl, Aluminium, Cadmium, Chrom oder Carbide oder Nitride von Übergangsmetallen umfasst.

9. Tank nach einem der vorhergehenden Ansprüche, **dadurch gekennzeichnet, dass** die Schicht aus Metallfüllmaterial (15) auf der Außenfläche (13) vorhanden ist und dadurch, dass auf der Innenfläche (12) des Aufnahmekörpers (11) eine Schicht fluorierten Polymers (19) gleichmäßig verteilt ist.

10. Verfahren zur Herstellung eines Tanks zur Aufnahme von Kraftstoff, einen ersten Schritt umfassend, in dem ein Aufnahmekörper (11) aus Kunststoffmaterial hergestellt wird, einen zweiten Schritt, in dem mindestens auf eine Außen- oder Innenfläche des Aufnahmekörpers (11) eine Schicht aus Metallfüllmaterial (15; 45; 51) abgeschieden wird, um eine Sperrwirkung zu erzielen, **dadurch gekennzeichnet, dass** es einen dritten Schritt umfasst, in dem über der Schicht aus Metallfüller (15; 45; 51) eine Schutzschicht (16) abgeschieden wird, um die Metallfüllerschicht (15; 45; 51) vor Oxidation zu schützen, worin die Schutzschicht (16) auf Epoxidlack basiert ist.

11. Verfahren nach Anspruch 10, **dadurch gekennzeichnet, dass** die Schicht aus Metallfüller (15; 51; 46) mittels Techniken der kathodischen Polymerisationsabscheidung abgeschieden wird.

12. Verfahren nach Anspruch 10, **dadurch gekennzeichnet, dass** die Schicht aus Metallfüller (15; 45) mittels Metallisierungstechniken abgeschieden wird, die ein Direktsprühen einer Metalllösung und einer Reduktionslösung mit Pressluft bereitstellen.

## Revendications

1. Réservoir destiné à contenir du carburant, comprenant un corps contenant (11) réalisé en un matériau plastique, au moins sur une surface, extérieure (13) ou intérieure (12), dudit corps contenant (11), au moins une première couche de matériau de remplissage métallique (15; 45; 51) étant contrainte sur ledit matériau plastique et en mesure d'annuler la perméation dudit carburant à travers ledit corps contenant (11), **caractérisé par le fait que** directement ou indirectement au-dessus de ladite au moins une première couche de matériau de remplissage métallique (15; 45; 51) est répartie uniformément une couche de protection (16) à même d'au moins protéger ladite première couche de matériau de remplissage métallique (15; 45; 51) contre l'oxydation, où ladite couche de protection (16) est à base de vernis époxy.

2. Réservoir selon la revendication 1, **caractérisé par le fait que** ladite première couche de matériau de remplissage métallique (15; 51) est contrainte sur ledit matériau plastique à l'aide de liaisons moléculaires obtenues par dépôt de polymérisation cathodique.

3. Réservoir selon la revendication 1, **caractérisé par le fait que** ladite première couche de matériau de remplissage métallique (15; 45) est obtenue au moyen de techniques de métallisation qui permettent une pulvérisation directe par de l'air comprimé d'une solution de métal et d'une solution réductrice.

4. Réservoir selon l'une quelconque des revendications précédentes, **caractérisé par le fait qu'**en plus de ladite première couche de matériau de remplissage métallique (45) est prévue une deuxième couche de matériau de remplissage métallique (46) directement en contact avec la première (45) et obtenue au moyen de dépôt de polymérisation cathodique ou au moyen de techniques de métallisation qui permettent une pulvérisation directe par de l'air comprimé d'une solution de métal et d'une solution réductrice, ladite couche de protection (16) étant disposée directement ou indirectement au-dessus de ladite deuxième couche de remplissage métallique (46).

5. Réservoir selon l'une quelconque des revendications précédentes, **caractérisé par le fait qu'**une autre couche de remplissage métallique (52) est disposée au-dessus de ladite couche de protection (16) et est obtenue par des techniques de dépôt de polymérisation cathodique ou par des techniques de métallisation qui permettent une pulvérisation directe par de l'air comprimé d'une solution de métal et d'une solution réductrice, et possiblement une autre couche de protection (47) de ladite autre couche de remplissage métallique (52).

6. Réservoir selon l'une quelconque des revendications précédentes, **caractérisé par le fait que** ledit matériau plastique comprend du polyéthylène haute densité.

7. Réservoir selon l'une quelconque des revendications précédentes, **caractérisé par le fait que** ledit matériau plastique comprend des additifs choisis parmi un groupe comprenant le nanoargile, les nanosphères et les nanotubes de carbone.

8. Réservoir destiné à contenir du carburant selon l'une quelconque des revendications précédentes, **caractérisé par le fait que** ladite couche de matériau de remplissage métallique (15; 45, 46; 51, 52) est réalisée en un matériau choisi parmi un groupe comprenant l'acier inoxydable, l'aluminium, le cadmium, le chrome ou les carbures ou des nitrures de métaux de transition.

9. Réservoir selon l'une quelconque des revendications précédentes, **caractérisé par le fait que** ladite couche de matériau de remplissage métallique (15) est présente sur ladite surface extérieure (13) et que sur la surface intérieure (12) dudit corps contenant (11) est répartie uniformément une couche de polymère fluoré (19).

10. Procédé de fabrication d'un réservoir destiné à contenir du carburant, comprenant une première étape au cours de laquelle est fabriqué un corps contenant (11) réalisé en matériau plastique, une deuxième étape au cours de laquelle est déposée, au moins sur une surface intérieure ou extérieure dudit corps contenant (11), une couche de matériau de remplissage métallique (15, 45, 51), pour créer un effet de barrière, **caractérisé par le fait qu'**il comporte une troisième étape au cours de laquelle une couche de protection (16) est déposée au-dessus de ladite couche de remplissage métallique (15; 45; 51), pour protéger ladite couche de remplissage métallique (15, 45, 51) contre l'oxydation, où ladite couche de protection (16) est à base de vernis époxy.

11. Procédé selon la revendication 10, **caractérisé par le fait que** ladite couche de remplissage métallique (15; 51; 46) est déposée par des techniques de dépôt de polymérisation cathodique.

12. Procédé selon la revendication 10, **caractérisé par le fait que** ladite couche de remplissage métallique (15; 45) est déposée par des techniques de métallisation qui permettent une pulvérisation directe par de l'air comprimé d'une solution de métal et d'une solution réductrice.
